# EUROPEAN PATENT APPLICATION

(11) **EP 1 621 411 A1**
(43) Date of publication of application: **01.02.2006**
(21) Application number: 04103654.2
(22) Date of filing: 29.07.2004
(51) Int. Cl.: B60R 21/01

(54) **Seat sensor system**

(71) Applicant: IEE INTERNATIONAL ELECTRONICS & ENGINEERING S.A., 6468 Echternach (LU)
(72) Inventor: Federspiel, Laurent, 5366 Munsbach (LU); Decoster, Yves, 6760 Ethe (BE); Orlewski, Pierre, 9021 Ettelbruck (LU); Lamesch, Laurent, 4881 Lamadelaine (LU)
(74) Representative: Beissel, Jean

(57) **Abstract**

A seat sensor system comprises at least one seat sensor associated to a seat for sensing a status related to a seat occupancy and for generating an output signal indicative of said status and a control unit for communicating with said at least one seat sensor. According to the invention at least one transmitter is associated with said seat, said transmitter being coupled to said at least one seat sensor, said transmitter for transmitting a data signal indicative of said output signal; and at least one receiver is coupled to said control unit, said receiver for wirelessly receiving said data signal from said transmitter.

## Description

### Introduction

The present invention generally relates to a seat detector e.g. for use in an automotive vehicle.

In modern vehicles, seat occupancy sensors are widely used in order to detect whether a passenger seat is occupied or not. The information about the occupancy of the passenger seat may then be used in order to control the deployment of one or more airbags associated to the vehicle seat (the deployment is e.g. inhibited if the vehicle seat is found to be non occupied).

Today's automotive safety standards require automotive vehicles to be equipped with seat belt reminder systems for reminding a vehicle passenger to fasten the seat belt associated to the occupied vehicle seat. Such seat belt reminder system comprise typically a seat occupancy sensor for detecting an occupancy of a vehicle seat and a seat belt sensor, e.g. a buckle switch sensor, for detecting whether a seat belt is fastened or not.

While until now, those seat sensors where mainly associated with the front seats of the vehicle e.g. for controlling airbag systems associated to the front seats or for generating warning signals relating to the fastening of the seat belts associated with the front seats, future standards will require that also rear seat be equipped with such seat occupancy sensors and seat belt reminder systems.

The seat occupancy sensors used in airbag control systems or seat belt reminder systems usually comprise pressure sensing devices integrated in the respective passenger seat for detecting a pressure induced by the presence of a passenger into the seat. The pressure sensing devices, as e.g. disclosed in DE-A-42 37 072, comprise a plurality of individual force sensors, which are connected in a suitable manner to a control unit designed for measuring a pressure depending electrical property of said individual pressure sensors. These occupancy sensors have proven to be very reliable and well adapted to the detection of seat occupancy.

The seat belt fastening detectors of seat belt reminder systems typically comprise mechanical or magnetic buckle switches for detecting, whether a latch of the seat belt is inserted into the seat belt buckle. One such buckle switch is e.g. disclosed in US Patent US-A-5,871,063. As an alternative to the buckle switches, seat belt fastening detectors have been proposed which generate a buckled/unbuckled signal based on the tension in the seat belt.

One drawback of these known seat sensors lies in the fact, that the seat occupancy sensor and/or the seat belt fastening detector have to be physically connected to the control unit by means of connection wires in order to be functional. This need for physically connecting the sensing device to the control unit however causes problems especially in modern cars equipped with a flexible seating system with removable and/or displaceable back seats.

### Object of the invention

The object of the present invention is to provide an improved seat sensor, which is suitable for association with removable vehicle seats.

### General description of the invention

In order to overcome the abovementioned problems, the present invention proposes a seat sensor system comprising at least one seat sensor associated to a seat for sensing a status related to a seat occupancy and for generating an output signal indicative of said status and a control unit for communicating with said at least one seat sensor. According to the invention at least one transmitter is associated with said seat, said transmitter being coupled to said at least one seat sensor, said transmitter for transmitting a data signal indicative of said output signal; and at least one receiver is coupled to said control unit, said receiver for wirelessly receiving said data signal from said transmitter.

The seat sensor system of the present invention is configured so as to enable remote communication between the seat sensor associated to the seat and the control unit for the seat sensor. The seat sensor accordingly transmits the data signal containing information regarding the seat occupancy related status wirelessly to the control unit. It follows that the seat sensor does not need to be connected to the control unit by means of connection lines. No wiring of the seat sensor being necessary, the seat sensor system does not negatively affect the advantages of the flexible seating systems of modern vehicles with removable and/or displaceable back seats. Furthermore, the present seat sensor system is well suited for use e.g. with an auxiliary child seat.

The control unit receives the data signal transmitted from the seat sensor and may further process this signal in order to e.g. generate either a warning signal (in case of a seat belt reminder system) or an airbag control signal (if the seat sensor is used for controlling the deployment of the airbag(s) associated with the seat). As the data signal from the seat sensor is remotely received, the control unit does not need to be installed into the vehicle seat but may be arranged at any suitable stationary location inside the vehicle. The control unit is accordingly not integrated into a (possibly) removable or displaceable seat so that power supply via cabling or wired connection to further components of the vehicle's electronic system is no issue. Accordingly the present seat sensor system is perfectly suited for the operation in removable vehicle seats.

In a preferred embodiment of the invention, said receiver is a multi-purpose receiver for receiving signals associated to different functions in an automotive vehicle. In this embodiment, the seat sensor system of the present invention advantageously uses a receiver module, which is already installed in the vehicle, as e.g. the receiver of the remote key entry. Such an embodiment, in which said receiver is e.g. a component of a remote key entry system of an automotive vehicle, reduces the overall costs of the system, as no additional dedicated receiver is needed.

It will be noted that the receiver of the remote key entry system is well suited for reception of signals from different locations in the vehicle. Thus the control unit may receive, via receiver of the remote key entry system, data signals transmitted both from seat sensors arranged in front vehicle seats and in rear seats. In this embodiment, seat sensor system may comprise a plurality of seat sensors associated with different seats of a vehicle, and said control unit is configured for communication with each of said plurality of seat sensors. A single common control unit reduces the complexity of the sensor system and consequently the overall costs of the system.

In a possible embodiment of the invention, a plurality of seat sensors are coupled to said at least one transmitter. This embodiment is of interest in the case of a rear seat bench, where several seat sensors associated to different seating positions are arranged in a common seat structure. These seat sensors then only require one single transmitter in order to communicate with the control unit. It will be appreciated, that this embodiment is also of interest if several seat sensors e.g. of different types, are associated with one single seat (removable or not).

In a preferred embodiment, said transmitter comprises processing means for encoding said output signal with a digital ID of said seat sensor and/or said seat and/or said transmitter into said data signal. In a multi-sensor environment, i.e. if the seat sensor system comprises a plurality of seat sensors, each individual seat sensor or each individual seat or each individual transmitter, from which a specific signal emanates, is then infallibly identifiable by the control unit so that the appropriate measures may be taken with respect to the correct seat.

In order to be able to generate and transmit a data signal to the receiver coupled to the control unit, the transmitter may be supplied by a battery module, which may be integrated into the respective seat. In a preferred embodiment however, the transmitter is configured as a self-powered transmitter. Such self-powered transmitters are known since several years and include a device for converting a mechanical energy into electrical energy. Accordingly, the self-powered transmitter does neither rely on an external electric power supply (connected by cabling) nor on internal battery power. The self-powered transmitter is accordingly suitable for autonomous operation which eliminates the need for cabling or occasional battery replacement. This embodiment thus enables autonomous seat occupancy detection in the seat, which in addition does not require regular maintenance.

The self-powered transmitter preferably comprises a piezo generator for converting a mechanical energy into electrical energy and an electronic converter unit for generating a transmitter power supply from said electrical energy. Self-powered transmitters of this kind are known as non-powered pushbuttons for performing remote switching operations. One such pushbutton is e.g. disclosed in the article "A Compact, Wireless, Self-Powered Pushbutton Controller," Joseph A. Paradiso and Mark Feldmeier. In Abowd, G.D., Brumitt, B., and Shafer, S., eds, "Ubicomp 2001: Ubiquitous Computing," ACM UBICOMP Conference Proceedings, Atlanta GA, Sept. 2001, Springer-Verlag Berlin Heidelberg, 2001, pp. 299-304.

Piezo generators are known for their low weight, small size, minimal complexity and low costs. These properties make piezo generators best suitable for the integration into a vehicle environment. In the environment of an automotive vehicle, the mechanical energy to be converted into electrical energy comes from both a pressure, an occupant exerts on the piezo generator integrated in the vehicle seat, and the constant motion induced vibrations in the seat. An occupant sitting in the vehicle seat exerts indeed a varying pressure on the piezoelectric element due to vibrations caused by the vehicle movement, so that the piezo-powered generator generates the required power for the electronic unit.

Since piezoelectronics produce high voltages at low currents and standard electronic circuitry requires low voltages at high currents, an electronic converter unit is used to convert the high voltage pulses of the piezo generator into a suitable DC current for supplying the transmitter module. In a very simple embodiment, the electronic converter unit may comprise a simple diode as rectifier and/or voltage limiter.

It should be noted, that the piezo generator of the transmitter can itself act as seat sensor i.e. as a seat occupancy detector for sensing an occupancy of said seat. In fact, if the piezo generator is suitably configured so as to operate only if an occupant is actually sitting in the seat, the transmitter module will only be powered of the seat is actually occupied. This means on the other hand, that if the control unit receives a signal from the transmitter unit, the seat is necessarily occupied. In this embodiment, no further dedicated seat occupancy sensor is needed. In order to ensure a reliable detection of a seat occupancy, the piezo generator should then comprises a piezofilm associated to a seating surface of said seat and extending over a substantial part of the seating surface.

In a different embodiment, the seat occupancy detector comprises a pressure sensitive switching device comprising a plurality of individual pressure sensors or switches associated with different locations of a seat surface and/or a capacitive field detection system including at least one capacitive electrode associated with a seat surface of said seat and/or a piezoelectronics sensor associated with a seat surface of said seat.

In a further embodiment, said seat sensor comprises a seat belt fastening detector for determining a seat belt usage condition related to said seat, i.e. a seat belt buckle switch sensor and/or a temperature sensor. In the latter case, the obtained temperature signal may be used for the calibration of a seat sensor response as well as for the control of air-conditioning device of the vehicle.

### Detailed description with respect to the figures

The present invention will be more apparent from the following description of several not limiting embodiments with reference to the attached drawings, wherein
- Fig.1:: shows in the a top view (upper part) and a sectional view (lower part) of a vehicle seat with seat sensor part;
- Fig.2:: shows schematically the operation of the seat sensor system of the present invention;
- Fig.3:: illustrates an embodiment of a seat sensor system.

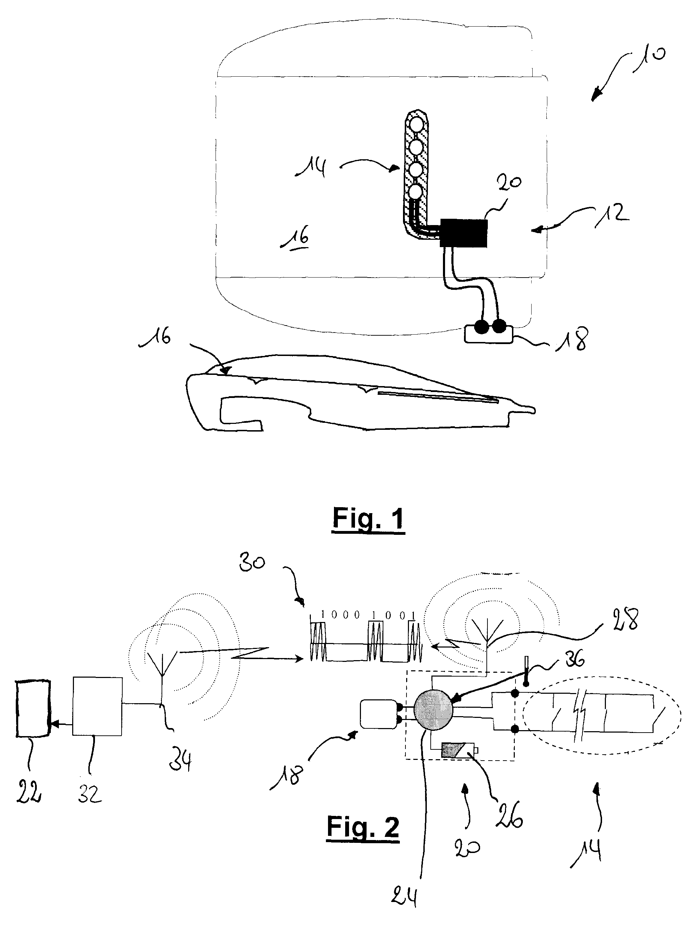

Fig. 1 schematically shows a top view (upper part) and a sectional view (lower part) of a vehicle seat 10 equipped with a seat sensor 12 according to one aspect of the present invention. The seat sensor 12 comprises a seat occupancy sensor 14, which is associated with a seating surface 16 of the vehicle seat 10. The seat occupancy sensor 14 comprises e.g. a foil-type pressure sensor, which is integrated into the vehicle seat in close vicinity of the upper seating surface 16 of the vehicle seat.

The seat sensor 12 represented in fig. 1 further comprises a seat belt buckle switch sensor 18 for determining a seat belt usage condition with respect to the vehicle seat 10. This seat belt buckle switch sensor 18 e.g. detects whether a latch of the seat belt is inserted into the seat belt buckle or not.

Both the seat occupancy sensor 14 and the seat belt buckle switch sensor 18 are connected to a transmitter 20, which is able to transmit a data signal comprising information about the detected conditions to a remote control unit 22. For this reason, the transmitter 20 comprises at least one electronic circuit 24 for generating a data signal 30 containing information about the statuses of different sensors 14 and 18. The so generated data signal is then transmitted to the control unit via a sending antenna 28 connected to the transmitter 20. The sending antenna 28 may be located at any suitable location within the vehicle seat. In a possible embodiment, the antenna 28 may be printed onto a carrier layer of the seat occupancy sensor 14. Alternatively antenna 28 may be configured as miniaturized antenna, which may be integrated into a housing of the transmitter electronic circuit.

In order to be able to generate and transmit said data signal, the transmitter comprises a power supply 26, which may be integrated into the vehicle seat 10. Power supply 26 may comprise a suitable battery pack or in a more preferred embodiment a piezo generator for converting a mechanical energy into electrical energy and an electronic converter unit for generating a transmitter power supply from said electrical energy.

In order to be able to receive the transmitted data from the transmitter 20, the control unit 22 is coupled to a receiver module 32 with receiving antenna 34. In order to reduce the overall cost of the present seat sensor system, the receiver module 32 is preferably part of an existing vehicle component such as the remote key entry system of the vehicle. These remote key entry systems for remotely activating the central locking system are nowadays part of the standard vehicle equipment. The receiver module of such remote key entry system is well suited for receiving signals transmitted from every possible location within the vehicle compartment. Accordingly this receiver module may be used with the seat sensor system of the present invention. It is clear that the transmitter will be configured in this case so as to encode the data signal in a manner, which is compatible with the remote key entry system.

The control unit 20, which may be arranged at any suitable location inside the vehicle, is accordingly connected to the receiver module 32 of the remote key entry system, so that the data signal 30 received by the receiver module 32 may be supplied to the control unit 20. The control unit 20 may then further process this signal in order to e.g. generate either a warning signal (in case of a seat belt reminder system) or an airbag control signal (if the seat sensor is used for controlling the deployment of the airbag(s) associated with the seat).

In a multi-sensor environment, i.e. if the seat sensor system comprises a plurality of seat sensors 12, each individual seat sensor 12 or each individual seat 10 or each individual transmitter 20, from which a specific data signal 30 emanates should be identifiable by the control unit. In a preferred embodiment, the electronic circuit 24 of the transmitter 20 therefore preferably encodes the output signals of the sensors with a digital ID of said seat sensor and/or said seat and/or said transmitter into said data signal 30. Furthermore, the electronic circuit of the transmitter 20 is preferably able to further encode a temperature signal from a temperature sensor 36. The obtained temperature signal may be used at the controller unit 22 for the calibration of a seat sensor response as well as for the control of an air-conditioning device of the vehicle.

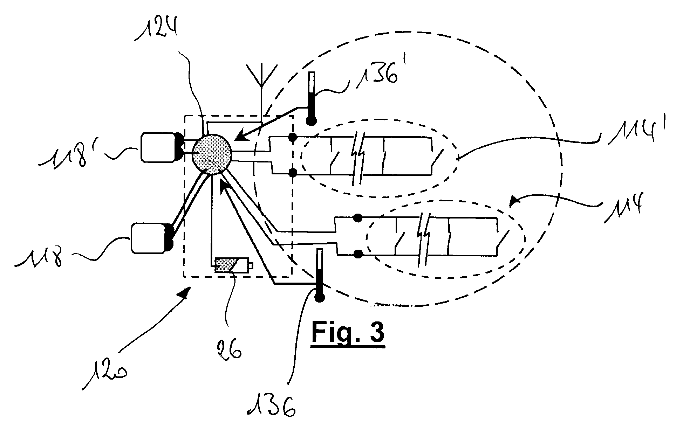

Fig. 3 illustrates an embodiment, wherein several seat occupancy sensors 114 and 114' as well as several buckle switch sensors 118 and 118' and temperature sensors 136 and 136' are coupled to a common transmitter 120. This embodiment may be used e.g. case of a rear seat bench, where several seat sensors associated to different seating positions are arranged in a common seat structure. In this case, the electronic circuit 124 of the transmitter 120 encodes the individual signals of the different sensors into a common data signal to be transmitted to the control unit.

### Listing of reference numerals

- 10: vehicle seat
- 12: seat sensor
- 14: seat occupancy sensor
- 16: seating surface
- 18: buckle switch sensor
- 20: transmitter
- 22: control unit
- 24: electronic circuit
- 26: power supply
- 28: antenna
- 30: data signal
- 32: receiver module
- 34: antenna
- 36: temperature sensor
- 114, 114': seat occupancy sensor
- 118, 118': buckle switch sensor
- 120: transmitter
- 124: electronic circuit
- 136, 136': temperature sensor

## Claims

1. Seat sensor system comprising
at least one seat sensor associated to a seat for sensing a status related to a seat occupancy and for generating an output signal indicative of said status and
a control unit for communicating with said at least one seat sensor,
**characterised by**
at least one transmitter associated with said seat, said transmitter being coupled to said at least one seat sensor, said transmitter for transmitting a data signal indicative of said output signal; and
at least one receiver coupled to said control unit, said receiver for wirelessly receiving said data signal from said transmitter.

2. Seat sensor system according to claim 1, wherein said receiver is a multi-purpose receiver for receiving signals associated to different functions in an automotive vehicle.

3. Seat sensor system according to any one of claims 1 to 2, wherein said receiver is a component of a remote key entry system of an automotive vehicle.

4. Seat sensor system according to any one of claims 1 to 3, wherein a plurality of seat sensors are coupled to said at least one transmitter.

5. Seat sensor system according to any one of claims 1 to 4, wherein said transmitter comprises processing means for encoding said output signal with a digital ID of said seat sensor and/or said seat and/or said transmitter into said data signal.

6. Seat sensor system according to any one of the preceding claims, wherein said transmitter comprises a piezo generator for converting a mechanical energy into electrical energy and an electronic converter unit for generating a transmitter power supply from said electrical energy.

7. Seat sensor system according to claim 6, wherein said piezo generator comprises a piezofilm associated to a seating surface of said seat.

8. Seat sensor system according to any one of claims 1 to 7, wherein said seat sensor comprises a seat occupancy detector for sensing an occupancy of said seat.

9. Seat sensor system according to claim 8, wherein said seat occupancy detector comprises a pressure sensitive switching device comprising a plurality of individual pressure sensors or switches associated with different locations of a seat surface.

10. Seat sensor system according to claim 8, wherein said seat occupancy detector comprises a capacitive field detection system including at least one capacitive electrode associated with a seat surface of said seat.

11. Seat sensor system according to claim 8, wherein said seat occupancy detector comprises a piezoelectronics sensor associated with a seat surface of said seat.

12. Seat sensor system according to any one of claims 1 to 11, wherein said seat sensor comprises a seat belt fastening detector for determining a seat belt usage condition related to said seat.

13. Seat sensor system according to claim 12, wherein said seat belt fastening detector comprises a seat belt buckle switch sensor.

14. Seat sensor system according to any one of claims 1 to 11, wherein said seat sensor comprises a temperature sensor.
